Europäisches Patentamt

European Patent Office

Office européen des brevets

(11) Numéro de publication : **0 155 894**
**B1**

# FASCICULE DE BREVET EUROPÉEN

(45) Date de publication du fascicule du brevet :
09.09.87

(51) Int. Cl.⁴ : **C 01 B 15/12**

(21) Numéro de dépôt : **85420035.9**

(22) Date de dépôt : **26.02.85**

(54) Procédé de fabrication de perborate de sodium monohydraté à partir de perborate de sodium tétrahydraté.

(30) Priorité : 01.03.84 FR 8403198

(43) Date de publication de la demande :
25.09.85 Bulletin 85/39

(45) Mention de la délivrance du brevet :
09.09.87 Bulletin 87/37

(84) Etats contractants désignés :
**AT BE CH DE FR GB IT LI LU NL SE**

(56) Documents cités :
**DE-C- 268 814**
**DE-C- 299 410**
**DE-C- 548 432**
**Le dossier contient des informations techniques présentées postérieurement au dépôt de la demande et ne figurant pas dans le présent fascicule.**

(73) Titulaire : **ATOCHEM**
**4 & 8, Cours Michelet La Défense 10**
**F-92800 Puteaux (FR)**

(72) Inventeur : **Dugua, Jacques**
**241, Chemin des Flachères**
**F-69390 Charly (FR)**
Inventeur : **Cuer, Jean Pierre**
**29 rue Bochu**
**F-69340 Francheville-le-Haut (FR)**

EP 0 155 894 B1

## Description

La présente invention concerne un procédé de fabrication de perborate de sodium monohydraté à partir de perborate de sodium tétrahydraté.

Le perborate de sodium de formule brute $NaBO_7H_8$, dénommé perborate de sodium tétrahydraté est couramment utilisé pour obtenir des compositions lessivielles. Il présente cependant des caractéristiques, telles que par exemple de vitesse de dissolution, de stabilité à la température, encore insuffisantes pour donner pleinement satisfaction dans ce domaine d'utilisation.

Aussi lui préfère-t-on de plus en plus le perborate de sodium dit monohydraté de formule brute $NaBO_4H_2$ qui possède par rapport au perborate de sodium tétrahydraté non seulement une teneur en oxygène actif supérieure de 50 % environ, mais encore une vitesse de dissolution plus rapide et une température de fusion plus élevée.

Les procédés connus de fabrication du perborate de sodium monohydraté à partir du perborate de sodium tétrahydraté consistent à éliminer de celui-ci la quantité désirée d'eau de cristallisation au moyen d'un courant d'air chaud.

Afin d'assurer une bonne répartition de l'air chaud dans la masse à déshydrater et d'éviter une décomposition exagérée de cette dernière, il a été généralement proposé d'effectuer sa deshydratation en la maintenant à l'état fluidisé au moyen du courant d'air chaud.

C'est par exemple le cas des procédés décrits dans le brevet belge n° 718 160 et dans le brevet français n° 1 081 421. L'avantage cité de tels procédés est en effet d'assurer une température uniforme dans la masse à déshydrater.

Toutefois, comme l'indique le brevet français n° 2 207 859, la deshydratation par l'air chaud du perborate de sodium tétrahydraté conduit soit à un perborate monohydraté de résistance à l'abrasion insuffisante, soit à un produit de résistance à l'abrasion améliorée, mais alors dans un procédé opérant à une température trop élevée pour éviter la fusion d'une partie de la charge et la présence de « croûtes » dans le produit fabriqué.

Aussi le brevet français n° 2 207 859 a-t-il pour but d'obtenir un produit de meilleure résistance à l'abrasion que celle des produits résultant des procédés antérieurs à l'air chaud en ne concédant qu'une fusion superficielle des grains de perborate. Cette fusion superficielle des grains est rendue possible grâce à une teneur élevée en vapeur d'eau de l'air chaud en contact avec la masse à déshydrater au cours de tout ou partie de l'opération. Cette forte humidité relative est réalisée au moyen de l'adjonction de vapeur d'eau saturée à l'air lors de son introduction dans la zone de déshydratation.

Le certificat d'addition français n° 2 285 339 au brevet français n° 2 207 859 spécifie que l'humidité de l'air nécessaire pour atteindre le résultat du brevet principal peut être assurée grâce à la seule évaporation de l'eau de cristallisation, mais alors il est nécessaire d'effectuer l'opération de déshydratation en deux étapes dont la première doit être lente.

Les procédés décrits dans le brevet et le certificat d'addition français ci-dessus présentent les trois inconvénients suivants : provoquer la formation de fines particules qui sont entraînées par le courant d'air et de vapeur d'eau, de nécessiter, pour que ne soit pas perdue une partie importante du produit, la séparation de ces fines particules du courant gazeux et ce d'une façon efficace et donc couteuse, d'offrir, au moins : localement, un risque certain de fusion totale de grains par suite du principe même sur lequel sont basés ces procédés.

Selon le brevet allemand DE-C- 268814 il est possible de provoquer le départ de trois moles d'eau du perborate tétrahydraté par chauffage de ce dernier sous pression réduite à la condition d'opérer en présence d'air se renouvellant. Cette technique s'inscrit par conséquent parmi celles énumérées ci-dessus puisque l'air est une fois encore considéré comme le moyen à appliquer pour assurer l'éloignement de l'eau libérée de la masse à déshydrater et éviter ainsi la décomposition de cette dernière et son gonflement.

On doit donc s'attendre selon l'état de la technique à une déshydratation de moindre qualité en absence d'air se renouvellant et par conséquent à l'obtention d'un produit fini dont il ne peut être évident qu'il possède l'ensemble des qualités requises par l'industrie, parmi lesquelles, en particulier, une résistance à l'abrasion élevée.

Les procédés connus ne permettent ni d'atteindre une production élevée, ni de réaliser l'opération d'une façon homogène sans perte par décomposition ni, lorsque cet écueil est évité, de conduire à un produit de résistance à l'abrasion suffisante ni, lorsque cette propriété se trouve améliorée, d'éviter une attrition conséquente et le risque de fusion des grains.

Le procédé selon l'invention permet d'éviter les inconvénients des procédés connus.

Il a en effet été trouvé que la déshydratation du perborate de sodium tétrahydraté est rapide et conduit à un perborate de sodium monohydraté de vitesse de dissolution et de résistance à l'abrasion élevées lorsqu'elle est réalisée à une température appropriée sous une pression réduite choisie dans une gamme déterminée de valeurs en l'absence d'air se renouvelant.

Le procédé de l'invention est caractérisé en ce que la déshydratation du perborate de sodium tétrahydraté en perborate de sodium monohydraté est réalisée à une pression absolue maintenue entre 0,03 bar et 0,13 bar et à une température de la masse à déshydrater n'excédant pas 70 °C, sans qu'aucun contact gazeux ne soit admis à pénétrer dans la zone de déshydratation.

En opérant à une pression absolue inférieure à 0,03 bar, la vitesse de déshydratation augmente encore mais la résistance à l'abrasion du produit fabriqué devient insuffisante.

En opérant à une pression absolue supérieure à 0,13 bar, la vitesse de déshydratation devient rapidement trop faible pour que les grains restent préservés du risque de fusion et pour que soit atteinte une productivité industrielle suffisamment élevée.

Le maintien sous pression réduite de la masse à déshydrater est réalisé par des moyens conventionnels et connus en soi.

La température de la masse à déshydrater est de préférence comprise entre 45 °C et 70 °C.

Les calories nécessaires à l'opération sont fournies au produit à déshydrater par des moyens connus tels que par exemple par circulation d'un fluide colporteur au niveau des systèmes support de la masse à déshydrater et/ou des parois du réacteur, à l'aide d'éléments chauffants fixes ou mobiles disposés dans la chambre de déshydratation, ou par effet micro-ondes.

Le procédé de l'invention peut être conduit en continu ou en discontinu dans tout appareillage permettant de travailler aux pressions maintenues dans les limites définies pour l'invention et munis d'un système de répartition des grains de perborate tel qu'il assure une température homogène dans la masse à déshydrater. De tels appareillages sont par exemple des sécheurs à bande ou à plateaux munis de racloirs, ou des sécheurs vibrants, ou des fours tournants. Le matériau choisi le plus couramment pour constituer de tels appareillages convenant à l'invention est l'acier inoxydable.

Les exemples suivants, donnés à titre non limitatif, illustrent le procédé de l'invention.

Les valeurs indiquées dans ces exemples sous le terme de taux d'usure par abrasion ont été déterminées comme suit : 50 g de perborate sont soumis durant 6 minutes à l'action de 8 billes d'acier inoxydable de 20 mm de diamètre contenues dans un cylindre horizontal en acier inoxydable de 100 mm de diamètre intérieur et de 115 mm de longueur tournant à une vitesse de 150 tours/minute ; le taux d'usure par abrasion est alors évalué comme étant le pourcentage pondéral de perborate de granulométrie inférieure à 53 μm.

Les mesures de surface spécifique du produit fabriqué, effectuées selon la méthode BET, montrent que le procédé de l'invention conduit à un perborate de sodium monohydraté pouvant avoir une surface spécifique inférieure à 10 $m^2/g$ et même généralement comprise entre 4 et 7 $m^2/g$.

Dans chacun des exemples ci-après, le rendement pondéral de perborate monohydraté obtenu par rapport au perborate tétrahydraté engagé est pratiquement quantitatif.

Exemple 1

1,6 kg de perborate de sodium tétrahydraté sec dont la teneur en oxygène actif est de 10,2 % en poids et le taux d'usure par abrasion de 4,5 % sont disposés sur la surface de 0,1 $m^2$ d'un plateau équipé d'un racloir rotatif à 4 pales, à l'intérieur d'une enceinte maintenue, grâce à une installation de pompage, sous une pression absolue de 0,08 bar et munie d'un système de chauffage par circulation d'un fluide caloporteur dans une double enveloppe.

La déshydratation du perborate tétrahydraté s'effectue à une température de 58 °C à 63 °C.

L'opération, durant laquelle la vapeur d'eau formée est condensée à l'extérieur de l'enceinte, est arrêtée après 30 minutes.

Le perborate monohydraté recueilli après mise à la pression atmosphérique et refroidissement rapide contient 15 % en poids d'oxygène actif et présente une surface spécifique de 4,1 $m^2/g$, une vitesse de dissolution de 100 % en moins de 1 minute et un taux d'usure par abrasion de 7,9 %.

Exemple 2

En procédant comme dans l'exemple 1, mais à une température de la masse à deshydrater de 55 °C a 61 °C durant 45 minutes, le perborate monohydraté obtenu renferme 15,8 % en poids d'oxygène actif et présente une surface spécifique de 6,3 $m^2/g$, une vitesse de dissolution de 100 % en moins de 1 minute et un taux d'usure par abrasion de 4,7 %.

Exemple 3

En procédant dans les mêmes conditions de pression et de température que dans l'exemple 2 mais avec 2,2 kg de perborate tétrahydraté renfermant 8 % en poids d'eau et une durée de l'opération de deshydratation de 75 minutes, le perborate monohydraté obtenu renferme 15,7 % en poids d'oxygène actif et présente une surface spécifique de 6,1 $m^2/g$, une vitesse de dissolution de 100 % en moins de 1 minute et un taux d'usure par abrasion de 4,3 %.

Exemple 4

En déshydratant 1,3 kg du perborate tétrahydraté de l'exemple 1 comme dans l'exemple 2, mais sous une pression absolue de 0,09 bar, le perborate monohydraté obtenu contient 15,6 % en poids d'oxygène actif, a une vitesse de dissolution de 100 % en moins de 1 minute et présente une surface spécifique de 4,8 $m^2/g$ et un taux d'usure par abrasion de 4,3 %.

Exemple 5

En opérant comme dans l'exemple 4 mais à une pression absolue de 0,035 bar et une température de la masse à deshydrater de 50 °C à 58 °C le perborate monohydraté obtenu renferme 15,6 % en poids d'oxygène actif, a une vitesse de dissolution de 100 % en moins de 1 minute et présente une surface spécifique de 8,2 $m^2/g$ et un taux d'usure à l'abrasion de 7,8 %.

Exemple 6

La déshydratation de 0,8 kg de perborate tétrahydraté de l'exemple 1 à une pression absolue de 0,03 bar et une température de la masse à deshydrater de 46 °C à 57 °C durant 50 minutes conduit à un perborate monohydraté dont la teneur en oxygène actif est de 15,5 % en poids, la vitesse de dissolution complète de moins de 1 minute, la surface spécifique de 9,0 m²/g et le taux d'usure par abrasion de 5 %.

Exemple 7

La déshydratation de 1,3 kg de perborate de sodium tétrahydraté à une pression de 0,13 bar durant 50 minutes s'est effectuée entre 62 °C et 67 °C et a conduit à un perborate de sodium monohydraté ayant une teneur en oxygène actif de 15,5 % en poids, une surface spécifique de 3,9 m²/g, une vitesse de dissolution de 100 % en moins de 1 minute et un taux d'usure par abrasion de 4,2 %.

**Revendications**

1. Procédé de fabrication de perborate de sodium monohydraté par déshydratation de perborate de sodium tétrahydraté par chauffage sous pression réduite caractérisé en ce que cette déshydratation est réalisée à une pression absolue maintenue entre 0,03 et 0,13 bar à une température de la masse à déshydrater n'excédant pas 70 °C sans qu'aucun courant gazeux ne soit admis à pénétrer dans la zone de déshydratation.
2. Procédé selon la revendication 1 caractérisé en ce que la température de la masse à déshydrater est comprise entre 45 °C et 70 °C.

**Claims**

1. Process for the manufacture of sodium perborate monohydrate by dehydration of sodium perborate tetrahydrate by heating under reduced pressure, characterized in that this dehydration is performed at an absolute pressure which is maintained between 0.03 and 0.13 bar at a temperature of the mass which is to be dehydrated not exceeding 70 °C, without any gas stream being allowed to enter the dehydration zone.
2. Process according to Claim 1, characterized in that the temperature of the mass to be dehydrated is between 45 °C and 70 °C.

**Patentansprüche**

1. Verfahren zur Herstellung von Natriumperboratmonohydrat durch Dehydratisierung von Natriumperborattetrahydrat durch Erwärmen unter vermindertem Druck, dadurch gekennzeichnet, daß die Dehydratisierung bei einem absoluten Druck zwischen 0,03 und 0,13 bar und bei einer Temperatur der zu dehydratisierenden Masse durchgeführt wird, die 70 °C nicht übersteigt, ohne daß man einen Gasstrom in die Dehydrationszone eindringen läßt.
2. Verfahren nach Anspruch 1, dadurch gekennzeichnet, daß die Temperatur der zu dehydratisierenden Masse zwischen 45 °C und 70 °C liegt.